(19) Europäisches Patentamt
European Patent Office
Office européen des brevets

(11) **EP 1 624 605 A1**

(12) **EUROPEAN PATENT APPLICATION**

(43) Date of publication:
08.02.2006 Bulletin 2006/06

(51) Int Cl.:
*H04L 1/00* (2006.01)

(21) Application number: 04018726.2

(22) Date of filing: 06.08.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **SIEMENS AKTIENGESELLSCHAFT**
**80333 München (DE)**

(72) Inventors:
• **Jenkac, Hrvoje**
**81373 München (DE)**
• **Stockhammer, Thomas**
**83346 Bergen (DE)**
• **Xu, Wen, Dr.**
**82008 Unterhaching (DE)**

(54) **Permeable-layer reception method for reliable multicast transmission in wireless systems**

(57) The invention covers a method at the receiver of a communications system to reconstruct data packets, whereby

• the data packets are accompanied by parity packets being generated from the data packets by the use of any channel code over bit or symbol positions of each or at least a subset of data packet,
• the data packets as well as the parity packets are transmitted over a system in which longer packets, regardless of the type of the packet, are segmented into smaller subunits referred to as segments in the following, with the segments adapted to the payload size of the transmission system,
• the segments experience losses or any other disturbances while they are transmitted,
• at the receiver the common order of processing, namely first reassembly of the segmented units, dropping of data and parity packets if at least one segment is detected as corrupt, and then decoding of the data packets by using the additional information of the parity packets, is altered such that

• either reassembly is performed after the reconstruction of the individual segments corresponding to data packets by also using the segments corresponding to parity packets based on the channel code over entire packets, or
• at the receiver reassembly of data and parity packets is performed, regardless of lost segments, whereby corrupted segments within the data or parity packets are signalled to the upper layers, the decoder performs decoding on data and parity packets and the decoder makes use of the signalling of corrupted segments.

FIG 7 Permeable-layer receiver: all received segments are forwarded to the upper layer. FEC decoding is performed on segment basis: FEC decoding is successful.

from Wireless Channel

**Description**

## I. INTRODUCTION

Currently Multimedia Broadcast and Multicast Services (MBMS) are introduced into GERAN and UTRAN. MBMS targets simultaneous distribution of multimedia content to many mobiles within a serving area. The expected traffic is believed to be in the area of weather information, traffic telematics, news broadcast, music streaming, video concert, sports replay or file sharing. A Multicast Data Traffic Channel (MDTCH) is planned to support data delivery in broadcast mode over the air interface. Multiple receivers listen to the same frequency at the same time in order to receive identical content.

In [1], requirements and recommendations for possible MBMS-specific extensions to the Radio Access Network (RAN) are listed. Among others it is stated that point-to-multipoint (p-t-M) solutions should be adopted to increase radio efficiency compared to multiple point-to-point (p-t-p) connections. According to [2], MBMS solutions should also minimize the impact on the RAN physical layer and maximize the reuse of existing features and protocols.

However, the use of common p-t-p connections in a wireless broadcast scenario is not feasible without any modifications. Especially commonly applied features such as the adaptation to the individual link quality by the use of adaptive coding and modulation schemes as well as power control are not possible. Consequently, at least some receiving entities will experience increased radio block loss rates. In addition, retransmission schemes based on common ARQ protocols are hardly realized in the wireless broadcast scenario due to the missing individual reverse links. Therefore, the loss of single radio blocks is unavoidable and loss rates in the order of 10% are common. To avoid outrageous header overhead, incoming IP or application layer packets are usually significantly larger than radio blocks. This requires segmentation and distribution of a single IP packet over several or even many radio blocks. However, as usually application layer packets are discarded at the receiver if just one of its radio blocks is lost, IP-packet loss rates after the wireless link exceed loss rates in the wired Internet by several orders.

To overcome this problem several proposals have been considered in the MBMS standardization, which can basically be classified into two categories. One set of contributions propose the definition of improved error correction schemes in the RAN. For example, Forward Error Correction (FEC) on the RLC layer based on block repetition [2], [3] or Reed-Solomon (RS) coding [6], [8], as well as Automatic Repeat reQuest (ARQ) strategies [4], [5] have been proposed. It was shown that some approaches cannot provide sufficient Quality-of-Service (QoS), whereas others show QoS performance comparable to p-t-p connections. However, the latter require significant changes in the existing infrastructure possibly even asking for new hardware. Hence, service providers as well as base station manufactures are reluctant to introduce these schemes and favor other approaches.

Other contributions propose to keep the existing RAN system basically unchanged, but the IP-based application itself should provide sufficient error resilience. However, ruling out any FEC can neither provide sufficient QoS for data transmission nor for real-time video, see e.g. [7]. Therefore, FEC schemes on the application layer are considered to be necessary for sufficient quality within MBMS. Efficient and low complexity protocols for Reliable Multicast Transmission (RMT) over the Internet exploiting FEC have already been proposed, e.g. [9], [10] and [11].

The key idea in this work is to exploit existing FEC techniques proposed for RMT over the Internet to provide sufficient QoS for broadcast over existing or future wireless systems. This would also allow the support of wired as well as wireless clients at the same time. Unfortunately, the high loss rates of IP-packets in wireless systems are not comparable to those on the wired Internet. Therefore, FEC schemes with low coding rate would have to be applied, which in turn results in very low system throughput. To achieve sufficient throughput for MBMS in the combination with application layer FEC, the following alternatives exist: (i) Modifications in the RAN have to be introduced to keep the IP-packet loss rates similar to those of the wired Internet, (ii) Only users with good receiving conditions and low radio block loss rates are supported, (iii) Receiver modifications are introduced such that with high rate FEC also users with common link qualities can be supported.

In the following we introduce the basic principles of application layer FEC and provide appropriate channel modeling for MBMS over GERAN. We present the performance when using alternatives (i) and (ii) based on estimations for optimal FEC schemes. The unsatisfying performance is shown. The main contribution of this work presents a very simple receiver modification, called permeable-layer receiver. In combination with application layer FEC, it provides the capability to support almost all users in the serving area with sufficient QoS. Theoretical bounds are presented. Finally, we verify the theoretical findings and apply practical LDGM codes.

## II. FEC ON APPLICATION LAYER

FEC in multicast or broadcast environments provides two key advantages [9]. First, lost packets can be reconstructed at the receiver, and second the ability is given that identical FEC packets can repair different loss patterns at multiple receivers. The input to an FEC encoder is some number k of equal length source symbols. The FEC encoder generates some number of code symbols $n - k$ that are of the same length as the source symbols. The chosen length of the symbols can vary upon each application of the FEC encoder, or it can be fixed. These encoding symbols are placed into packets for transmission. The number of encoding symbols placed into each packet can vary on a per packet basis, or a fixed number of symbols (often one) can be placed into each packet. Also, each packet contains sufficient information to identify the particular code symbols in the payload of the respective packet. Upon receipt of packets containing code symbols, the receiver feeds these code symbols into the corresponding FEC decoder to reconstruct an exact copy of the k source symbols.

In the remainder of this work we assume all source packets to be of equal size S and concentrate on the case where $n - k$ parity IP-packets are created from k source packets by performing a bit or symbol-wise encoding utilizing an FEC code.

Ideally, the FEC decoder can reconstruct an exact copy of the source packets from any $k$ of the $n$ code packets. A FEC code which provides this ability is called Maximum Distance Separable (MDS) [12]. All practical codes are bounded by the MDS property. Reed-Solomon (RS) codes for instance are MDS codes, but are limited to block lengths $n < 2^q - 1$, with $q$ denoting the symbol size. Since usually the symbol size is selected *to q* = 8, which corresponds to one byte, the maximum block length is restricted to $n \leq 255$. Furthermore, RS codes have a significant encoding and decoding complexity in the order of O *(n.(n - k))*. Therefore, other codes operating with arbitrary long block lengths k → oo and providing low encoding and decoding complexity are desirable. Recently, these codes have gained significant interest with the introduction of LT and Raptor codes [19], [20]. These practical codes allow encoding for arbitrary block lengths but do not achieve the MDS property [13]. Usually, *k'* with $k' \geq k$ symbols on average have to be received to reconstruct all k information symbols. Codes are generally characterized by their inefficiency ratio $\varepsilon = k'/k$.

In [14] Low-Density Generator Matrix (LDGM) codes, a subclass of Low-Density parity check (LDPC) codes, have been proposed and investigated. LDGM codes operate on large block lengths, enable low-complexity encoding and decoding of the order O (k), and achieve inefficiency ratios as small as $\varepsilon$=1.2. In [10] these codes are also introduced into the RMT framework. Therefore, as a software implementation is publically available [17], and these codes are proven to be capable to perform real-time encoding and decoding in software, we have chosen to use these codes in our work. However, the framework introduced here is generally applicable for other codes with lower inefficiency such as LT or Raptor codes.

## III. WIRELESS SYSTEM MODEL

### A. Exemplary System: GPRS Protocol Stack

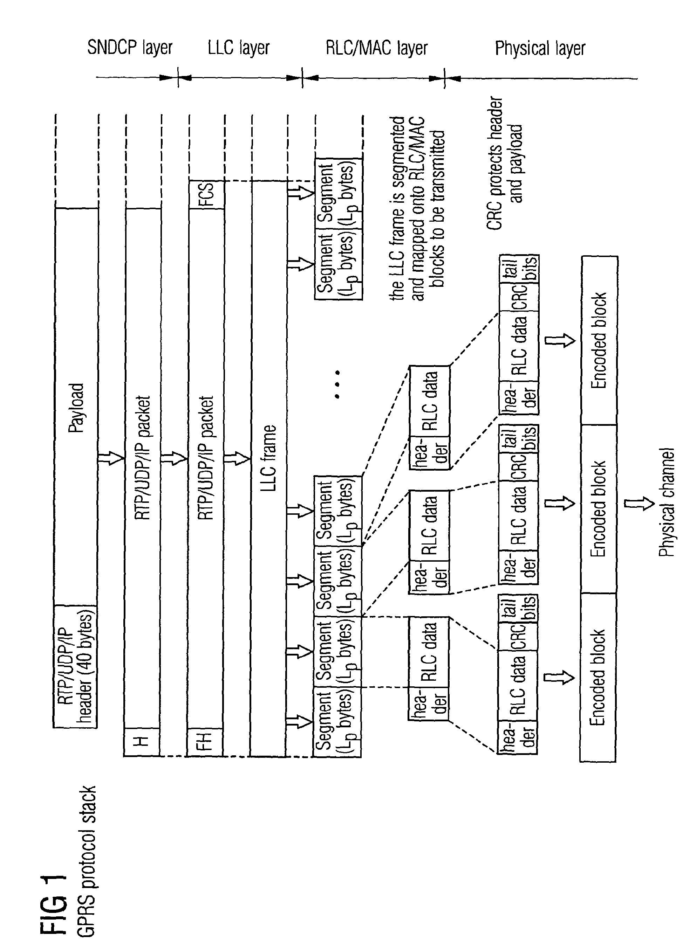

Fig. 1 shows the typical processing of (RTP/UDP/IP) packets at the various stages of the GPRS protocol stack: After optional header compression at the SNDCP and framing at the LLC layer, the resulting SDU at the RLC layer is segmented into equally sized segments, each of length L bytes. The segment size depends on the applied coding scheme at the physical layer. In order to avoid stuffing in the final segment of an RLC-SDU, the remaining byte positions are often filled up with data from the next RLC-SDU. Each segment is then mapped onto the data part of an RLC/MAC block. Finally, a CRC is appended before passing it to the channel encoder. The encoded block of constant size 456 bit is then interleaved over four bursts, which are mapped on the assigned time-slot in four successive TDMA frames. At the receiver, channel decoding is performed on each of the received and de-interleaved blocks. Any residual bit errors are detected via the CRC, and the respective RLC/MAC block is commonly declared as lost to avoid error propagation across layers.

### B. System Level Modeling

A huge amount of channel models for wireless or mobile communication systems exist, depending on the level of abstraction: signal level, bit-level, radio-block level, application level, etc. Usually bit error as well as block or packet loss patterns or equivalent models are applied in order to investigate the behavior of upper layers. In order to assess, evaluate, and compare different proposals for MBMS, 3GPP SA4[1] has agreed on simple models for IP packet losses in [15]. However, this model abstraction ignores the segmentation and reassembly process and that IP-packet losses result from lost radio blocks on lower layers. Therefore, we use a more detailed model in the remainder of this work by taking into account the radio block losses rather than only IP packet losses. The segmentation and reassembly process are included in the modeling.

[1] This working group addresses the integration of common IP applications in existing wireless systems such as GERAN and UTRAN

Here, the modeling of the RLC block losses is briefly presented. We assume that radio blocks are lost statistically independent with probability $p_s$, which is a fairly good assumption for systems with frequency hopping and is a common and well-accepted working assumption within the GERAN standardization, e.g. [16]. The loss probability $p_s$ depends on the channel condition of individual receivers and the applied coding scheme. Loss probabilities for radio blocks can be obtained by physical layer simulations or by measurements. Typical worst case assumptions for radio block losses are in the range of $p_s$ = 0.1, which is a target loss rate in UMTS and also corresponds to worst-case user assumption in GERAN.

### C. Protocol Stack Abstraction

In Section III-A, we briefly reviewed the GPRS protocol stack. To allow system- independent investigations, we abstract the main characteristics of wireless communication systems, and introduce a simplified protocol stack to characterize the nowadays wireless systems on system level.

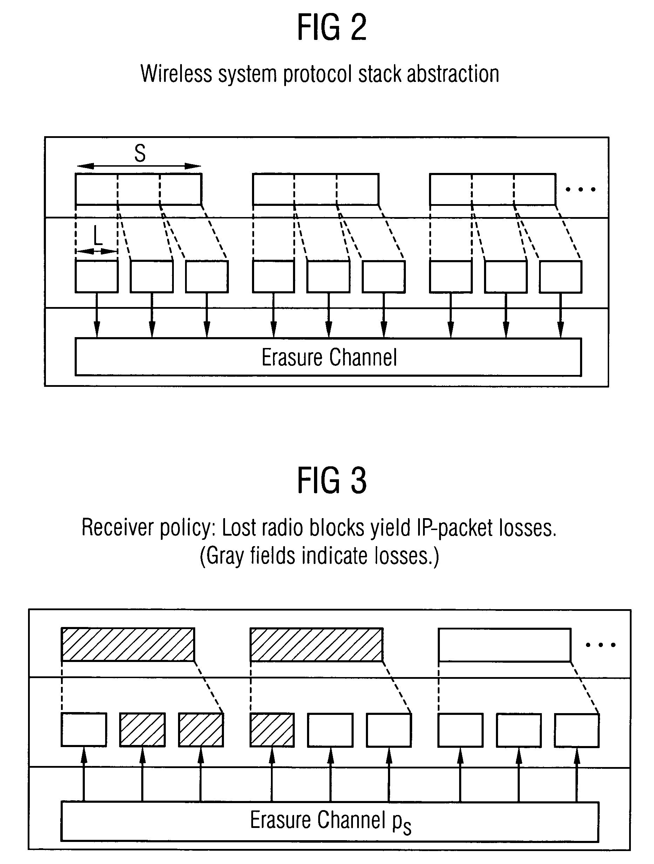

Fig. 2 shows a simplified protocol stack, where IP-packets of length S are segmented into segments of constant size L. The segments are mapped to radio blocks which are assumed to be transmitted over lossy erasure channel according to subsection III-B. At the receiver, reassembly of the IP packet is performed before it is forwarded to the receiver on the IP layer.

*D. System Performance Estimation with Application Layer FEC*

The common strategy for wireless receivers is shown in Fig. 3. Only IP-packets with all segments being correctly received are forwarded to the upper layer. If only one segment of an IP-packet is lost the entire IP-packet is declared as lost, since in general applications cannot handle incomplete IP packets. Consequently only the completely received IP packets are considered in the decoding process within the FEC decoder. In the following we derive analytical bounds for the

IP-packet loss rate $\kappa$ as a function of the radio block loss rate $p_s$. Assume that we apply an FEC code with information block length $k$, code block length $n$ and MDS properties, i.e. it is sufficient to receive any k out of $n$ packets in order to reconstruct *all k* information packets. We define the code rate $R=k/n$, and the packet-to-segment ratio $\rho = S/L$. For statistically independent segment losses, the IP-packet loss rate before FEC decoding is given by $p_{IP} = 1-(1-p_{IP})^{\rho}$. Assuming MDS properties, the residual IP-packet loss rate after decoding can be computed as

$$\kappa = \frac{1}{n} \sum_{i=n-k+1}^{n} i \cdot \binom{n}{i} p_{IP}^i (1 - p_{IP})^{n-i}. \qquad (1)$$

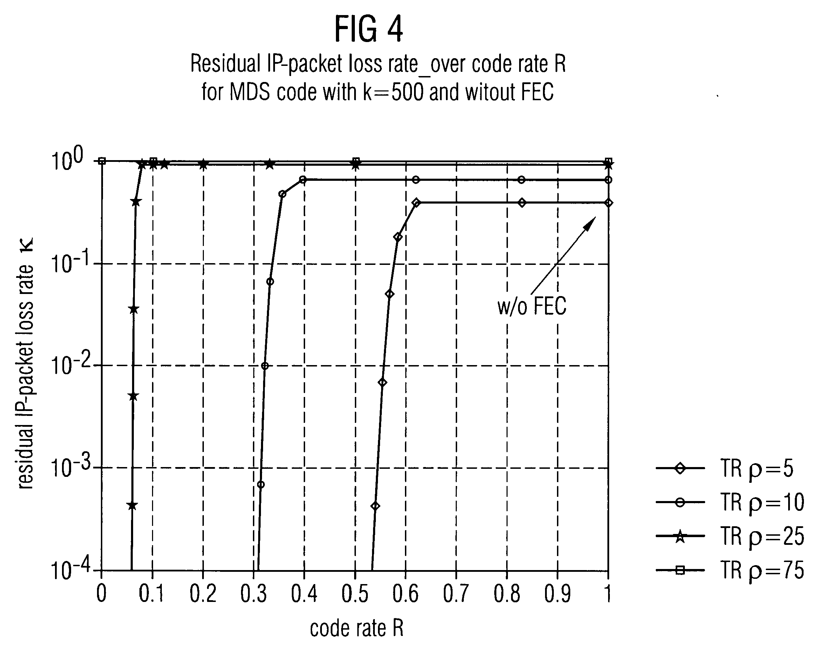

Fig. 4 shows the corresponding residual IP-packet loss rate over the code rate R for a radio block loss probability of $p_s = 0.1$, information block size k = 500 bits and for different packet-to-segment ratios $\rho$. We have chosen $p_s = 0.1$, since this is a worst-case assumption in GERAN and corresponds to the GERAN coding scheme CS1 and C/I = 7.5 dB. For the special case of R = 1, i.e. $n = k$, the IP-packet loss rate without additional FEC on application layer is obtained. As already mentioned above, desired IP-packet loss rates in the MBMS framework are in the range of $\kappa \leq 10^{-2}$, even lower error rates are desired for data applications. Without FEC the investigated system cannot meet these requirements at all. If outer coding is applied (R < 1) the residual IP-packet loss rates decrease with decreasing code rate R. However, with increasing packet-to-segment ratio $\rho$ corresponding to increasing IP-packet sizes, the required code rate R to meet the requirements decreases also. This means that the number of required parity packets increases and hence the system throughput decreases significantly. For a fixed code rate R, different IP-packet sizes S result in varying loss rates. Assuming a segment size of L = 20 byte (GERAN CS1), for IP-packets larger than S = 200 bytes the achieved throughput gets impractically low as very low code rates are required. However, very small IP packets would also mean that the header overhead has to increase significantly. Such inefficient schemes are not considered here.

**IV. PERMEABLE-LAYER RECEIVER**

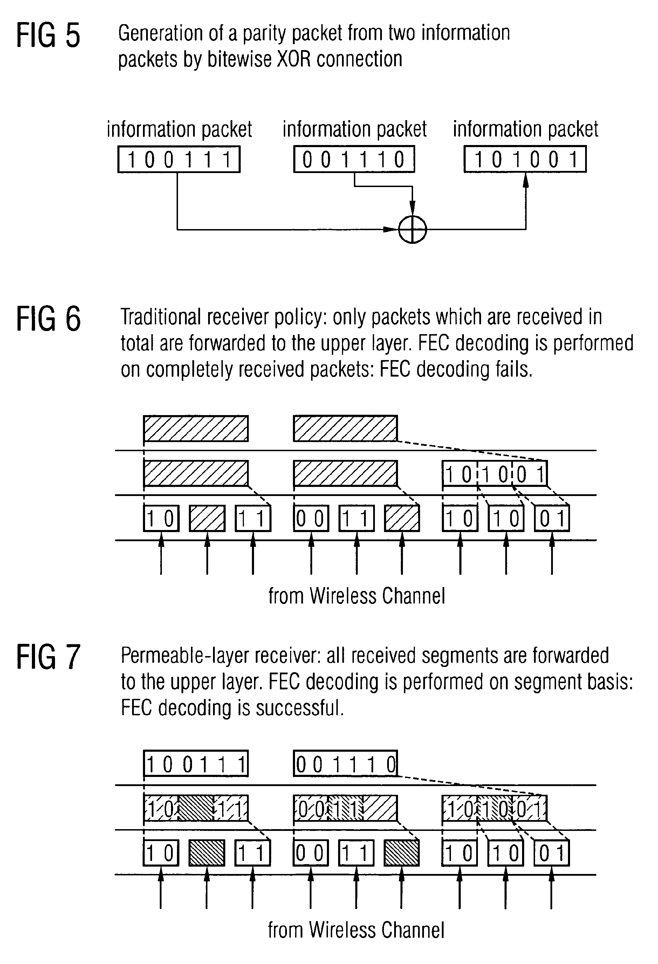

As already stated in the previous sections traditional receivers ignore a significant amount of correctly received data as RLC blocks are discarded if just any segment within the IP-packet is corrupted. In general this is necessary for applications which cannot make use of incomplete IP-packets. In addition, no standardized means exist to indicate missing parts of IP-packets to the application in the higher layer through the network. However, the receivers in wireless systems can be modified such that they allow to pass information from lower layers into the application layer decoder. Whereas standardized applications do not expect any indications of partly received IP packets, the decoder for application layer FEC can be modified such that it can make use of this information. Thereby, no modifications at transmitter side are necessary. This will be illustrated in the following based on a simple example. Assume a transmitter according to Fig. 5. An $(n, k) = (3, 2)$ parity check code is used to produce a parity packet from two information packets by bit-wise XOR connection, each packet of size S = 6 bit. The radio blocks consist of $L = 2$ bit such that the application layer packets in this illustrative example are segmented into three segments, i.e., $\rho = 3$. Assume that for a certain user two out of nine radio blocks are not received as shown in Fig. 6. The traditional receiver has to discard two IP-packets as the RLC blocks correspond to two different IP-packets. Only the parity packet is completely received. Unfortunately, the FEC decoder cannot reconstruct two information packets from a single received parity packet; both IP-packets are lost.

An alternative receiver strategy is proposed in the following to make use of correctly received segments in the application layer FEC decoder. We refer to this enhanced receiver strategy in the following as *Permeable-Layer Receiver (PLR)* as it allows to forward partly received information over layer boundaries. In this case, all received segments transported via radio blocks are forwarded to the upper layer, regardless whether the IP-packet is lost or not. Lost segments have to be indicated by erasure symbols in the reassembled IP-packet. However, as no IP-packets are dropped, the layer boundary between the RLC layer and the IP-layer is viewed as *permeable.* The FEC decoding is then performed on segment basis rather than on entire IP-packet basis.

Assume now the *PLR* is applied for the same scenario as illustrated in Fig. 6. The receiver applies decoding over partly received application layer packets using the same decoder as traditionally applied for entire application layer packets for each position of the application layer packets. If the decoder applies this strategy, it is similar as if application layer packets of size L would have been used. Actually, the decoder can operate as if the application layer packets do have size S = L, but avoids the header overhead of short packets. Fig. 7 illustrates the benefits of the PLR: Since all received segments are forwarded to the upper layer and FEC decoding is performed segment-wise, the decoding operation over the segments is successful, i.e. both information packets can be recovered.

In order to compare the performance of the *PLR* receiver with the *traditional receiver* (TR) strategy, we derive the residual IP-packet loss rate k assuming the availability of a perfect MDS code. Since the FEC decoder operates segment-wise and is aware of lost segments due to appropriate erasure indication, the loss rate $\hat{p}$ of segments after decoding is given by

$$\hat{p} = \frac{1}{n} \sum_{i=n-k+1}^{n} i \cdot \binom{n}{i} p_s^i \left(1 - p_s\right)^{n-i}$$

Consider a statistically independent segment loss process with loss rate $\hat{p}$ as a worst-case assumption, the residual IP-packet loss rate becomes

$$k = 1 - \left(1 - \hat{p}\right)^{\rho}$$

which serves as an upper-bound on the actual residual error rate.

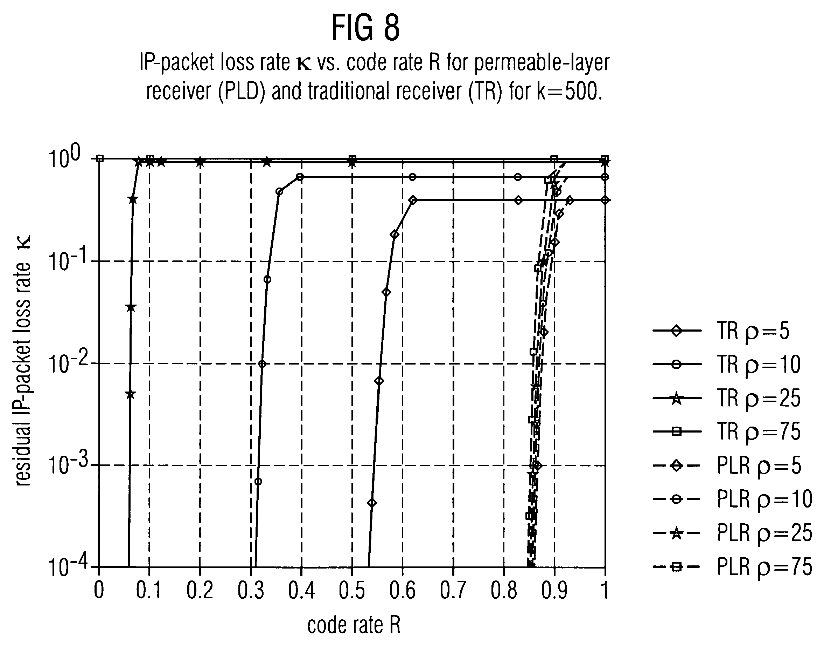

Fig. 8 shows the residual IP-packet loss rates applying the *PLR* and the *TR* for $p_s = 0.1$, different p, *and* k = 500. Significant gains of the *PLR* when compared to the TR are obvious. The performance of the *PLR* compared to the TR is increased in the order of magnitudes. The required code rate R in order to achieve a desired IP-packet loss rate k is increased drastically. For the *PLR,* the performance with increasing p also decreases, which is evident from (3). However, as can be observed, the performance loss is insignificant and in fact the curves are very close to each other. This allows full degree of freedom in selection of p, and hence the IP-packet size, the performance of the system is basically independent of the IP packet size. Since the code rate R directly influences the achievable system throughput in the case of $\rho$ = 5 a throughput gain of 1.5, for p = 10 a throughput gain of 2.7, and for p = 25 a throughput gain of 14.2 is achieved, for a target IP-packet loss rate of $10^{-3}$ .

## V. SIMULATION RESULTS FOR LDGM CODES

In order to validate the theoretical findings from the previous sections with practical codes we performed extensive simulations with LDGM [14] codes which were proposed for RMT in [10] and allow encoding for large block lengths k. Our simulations were based on the publicly available LDGM distribution [17]. The existing software platform has been extended by the simplified wireless protocol stack and the channel model as introduced in section III. Specifically, we performed simulations with the *LDGM staircase* code with left degree $d_l$ = 3. For a detailed description on encoding and decoding, as well as implementation details of the LDGM code, we refer the interested reader to [14] and [18]. At the receiver we implemented both, the traditional receiver and the *permeable-layer receiver* in order to compare the performance with practical codes.

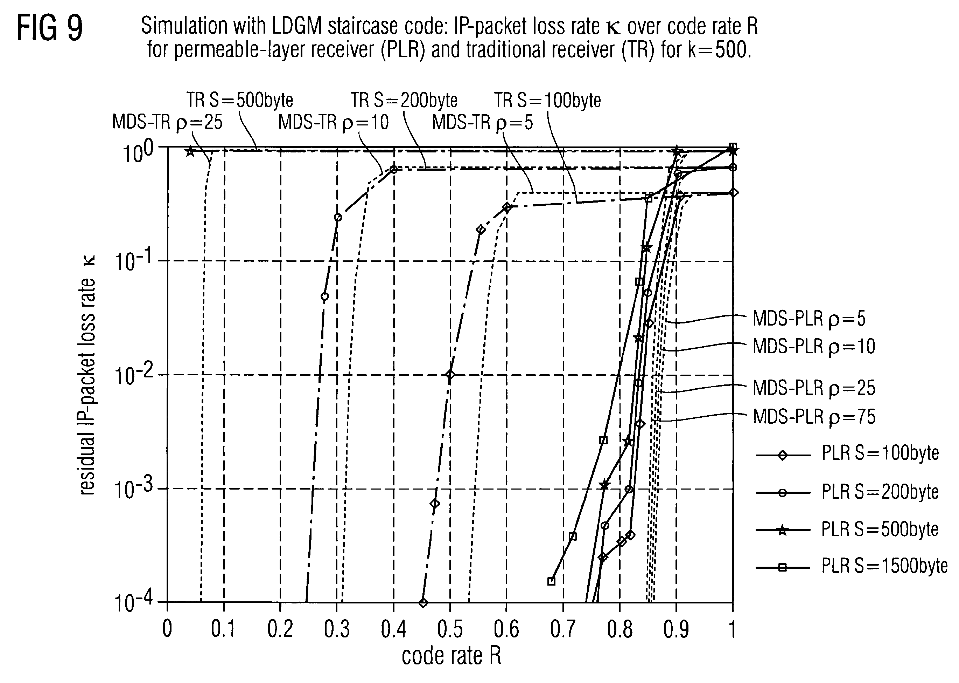

For the simulations we selected radio block size L = 20 byte, IP-packet length S = { 100, 200, 500, 1500} byte, number of information packets k = 500 and radio block loss probability $p_s$ = 0.1. In Fig. 9 the simulation results (dashed lines) are shown together with the theoretical bounds for MDS codes (solid lines). As can be observed, the simulation results are consistent with the theoretical findings, for both *PLR* and *TR.* However, the performance of the codes is slightly worse. In fact, since the LDGM code does not provide MDS performance ($\varepsilon \approx 1.2$) the degradation compared to the theoretical performance bounds has been expected. In addition, a performance degradation with increasing IP-packet size for *PLR* decoding can be observed as well. However, as we have not considered IP-header overhead in this work we expect that the performance will be in favor of longer packets for practical systems. Finally, it can be observed that a target IP-packet loss rate of $\kappa = 10^{-3}$ can be achieved with the *permeable-layer receiver* with a code rate of R = 0.75. This result is comparable to the performance achieved by FEC in the RLC layer [6], which however requires several modifications in the RAN.

## VI. CONCLUSIONS

In this work we investigated Forward Error Correction (FEC) for Reliable Multicast Transmission (RMT) over wireless with application to Multimedia Broadcast and Multicast Services (MBMS). We introduced a wireless channel model and presented a simplified protocol stack for the wireless receiver. First we showed by analytical analysis based on Minimum Distance Separable (MDS) codes that FEC on application layer can not meet the required target IP-packet loss rate with sufficient throughput at the wireless receiver using traditional receiver strategies. Furthermore, the loss rate was shown to depend significantly on the applied IP-packet size. The traditional receiver strategy, where IP-packets are discarded at the receiver if at least one of its radio blocks has been lost, was identified to be suboptimal in the combination with FEC on the application layer.

We presented a very simple receiver modification, and coined the term *permeable-layer receiver* to emphasize that IP-packets are forwarded to the upper layer, even if they are received incompletely. Only, slight modifications at the FEC decoder are required in order to allow decoding on segment basis rather then on packets. The transmitter as well as RAN is basically unchanged. Enormous gains in terms of residual IP-packet error could be achieved by utilizing this *permeable-layer receiver.* Furthermore, the performance is almost independent of the IP-packet length. Finally, we verified the theoretical finding by simulations using LDGM staircase codes. We could show that the practical realization meets the theoretical findings very well. However, the practical performance is slightly worse, due to the inefficiency of the LDGM code. The presented system allows the support of wired a wireless clients in a RMT environment at the same time.

Future work will address investigations with codes which provide lower inefficiency ratios, like *LT* codes [19] or *Raptor* codes [20]. We are also optimistic that these codes can successfully be applied in the cell reselection process. Preliminary results show the superiority of the *permeable-layer receiver* in such environments. Furthermore, we plan to include FEC on application layer in combination with the *permeable-layer receiver* into our online wireless emulator platform WiNe2 [21] for being able to demonstrate real-time MBMS applications with high quality.

**REFERENCES**

[1] 3GPP TR 25.992-140, *Multimedia Broadcast/Multicast Service (MBMS); UTRAN/GERAN requirements,* ETSI, 2003.

[2] TSG GERAN Tdoc GP-0300002, *Performance ofMBMSRadio Bearers,* Nokia, TSG GERAN MBMS Workshopp, Espoo (Finland), May 2003.

[3] TSG GERAN Tdoc GP-0300007, *On MBMS Bearer Definition,* Siemens, TSG GERAN MBMSWorkshopp, Espoo (Finland), May 2003.

[4] TSG GERAN Tdoc GP-032647, *Retransmission Strategies for MBMS,* Siemens, TSG GERAN # 17, Budapest (Hungary), Nov. 2003.

[5] TSG GERAN Tdoc GP-0400356, *Performance of ptm retransmission strategies,* Siemens, TSG GERAN # 18, Reykjavik (Iceland), Feb. 2004.

[6] H. Jenkac, G. Liebl, T. Stockhammer, and W. Xu, "Flexible Outer Reed- Solomon Coding on RLC Layer for MBMS over GERAN," in *Proc. VTC Spring 2004,* Milan, Italy, May 2004.

[7] H. Jenkac, G. Liebl, and T. Stockhammer, "H.264/AVC Video Transmission over MBMS in GERAN," in *Proc. MMSP,* Siena, Italy, Sep. 2004.

[8] P. Agashe, R. Rezaiifar, and P. Bender, "Cdma2000 high rate broadcast packet air interface design," *IEEE Commun. Magazine,* pp. 83-89, Feb. 2004.

[9] M. Luby, L. Vicisano, J. Gemmell, L. Rizzo, M. Handley, and J. Crowcroft, *The Use of Forward Error Correction (FEC) in Reliable Multicast,* RFC 3453, Dec. 2002.

[10] J. Peltotalo, S. Peltotalo, and V. Roca, *Simple XOR, Reed-Solomon, and Parity Check Matrix-based FEC Schemes,* Internet-Draft, Jun. 2004.

[11] T. Paila, M. Luby, R. Lehtonen, V. Roca, and R. Walsh, *FLUTE - File Delivery over Unidirectional Transport,* Internet-Draft, Jun. 2004.

[12] S. Lin and D. J. Costello, Jr., *Error Control Coding - Fundamentals and Applications.* Prentice-Hall, 1983.

[13] M. Luby, M. Mitzenmacher, A. Shokrollahi, and D. Spielmann, "Efficient erasure correcting codes," *IEEE Trans. Inform. Theory,* vol. 47, pp. 569-584, Feb. 2001.

[14] V. Roca, Z. Khallouf, and J. Labourne, "Design and evaluation of a low density generator matrix (ldgm) large block fec code," in *Proc. Fifth International Workshop on Networked Group Communication (NGC'03),* Munich, Germany, Sept. 2003.

[15] 3GPP TSG-SA WG4 S4-030802, *Evaluation of application layer FEC for MBMS,* PSM SWG, Meeting # 29, Tampere, Finland, Nov.

[16] TSG GERAN Tdoc GP-0300014, *Bit rate and retransmission aspects for p-t-m MBMS in GERAN,* Ericsson, TSG GERAN MBMS Workshopp, Espoo (Finland), May 2004.

[17] V. Roca and al., *LDPC/LDGM Distribution,* URL: http://www.inrialpes.fr/planete/people/roca/mcl.

[18] V. Roca and C. Neumann, "Design, evaluation and comparison of four large fec codecs, ldpc, ldgm, ldgm staircase and ldgm triangle, plus a reed-solomon small block fec code," Institut National de Recherche en Informatique et en Automatique, Tech. Rep., Jun. 2004.

[19] M. Luby, "LT codes," in *Proc. 43rd Annual IEEE Symposium on Foundations of Computer Science,* 2002.

[20] A. Shokrollahi, "Raptor codes," Digital Fountain, Tech. Rep. DR2003-06-001, Jun. 2003.

[21] T. Stockhammer, G. Liebl, H. Jenkac, P. Strasser, D. Pfeifer, and J. Hagenauer, "Wine2 - wireless network demonstration platform for ip-based real-time multimedia transmission," in *Proc. Packet Video Workshop 2003,* Nantes, France, Apr. 2003.

**Claims**

1. Method for reconstruction of data packets transmitted to a receiver of a communication system, **characterized in that**

• the data packets are accompanied by parity packets being generated from the data packets by the use of a channel code over bit or symbol positions of each or at least a subset of data packet,

• the data packets as well as the parity packets are transmitted over a system in which longer packets, regardless of the type of the packet, are segmented in smaller subunits, referred to as segments in the following, with the segments adapted to the payload size of the transmission system,

• the segments experience losses or any other disturbances while they are transmitted,

• at the receiver the common order of processing, namely first reassembly of the segmented units, dropping of data and parity packets if at least one segment is detected as corrupt, and then decoding of the data packets by using the additional information of the parity packets, is altered such that

   • either reassembly is performed after the reconstruction of the individual segments corresponding to data packets by also using the segments corresponding to parity packets based on the channel code over entire packets, or

   • at the receiver reassembly of data and parity packets is performed, regardless of lost segments, whereby corrupted segments within the data or parity packets are signalled to the upper layers, the decoder performs decoding on data and parity packets and the decoder makes use of the signalling of corrupted segments.

2. Method according to claim 1, **characterized in that** an algorithm is used for decoding, which algorithm is based on the assumption that individual bits or symbols are either erased or correctly received, i.e. erasure decoding.

3. Method according to claim 1 and 2, whereby for decoding and reconstruction of corrupted segments an algorithm is used which is initially designed for the decoding of entire data packets whereby the original algorithm is based on exploiting the information on entire data packets and parity packets rather than only segments.

4. Method according to any one of the preceding claims, **characterized in that** said channel code applied is a parity check code, a Reed-Solomon code, a Tornado code, a LDPC code, a LDGM code, a LT code, a Raptor code, a code in compliance with RFC3452- and RFC3453- specifications or a binary or symbol based channel code.

5. Method according to any one of the preceding claims, **characterized in that** the data packets are of constant length or of variable length.

6. Method according to any one of the preceding claims, **characterized in that** the data packets are RTP packets, IP packets, packets in compliance with RFC3452- and RFC3453-specifications or RLC-SDUs.

7. Method according to any one of the preceding claims, **characterized in that** the decoding is based on an XOR-operation applied to data packets.

8. Method according to claim 4, **characterized in that** decoding is based on a Berlekamp-Massey algorithm with erasure decoding.

9. Method according to any one of the preceding claims, **characterized in that** decoding is based on a belief propagation algorithm.

# FIG 1

GPRS protocol stack

| RTP/UDP/IP header (40 bytes) | Payload | |
|---|---|---|

⇩

| H | RTP/UDP/IP packet | |
|---|---|---|

⇩

| FH | RTP/UDP/IP packet | FCS |
|---|---|---|

⇩

| LLC frame |
|---|

⇩ ⇩ ⇩ ⇩ ⇩ ⇩

| Segment ($L_p$ bytes) | Segment ($L_p$ bytes) | Segment ($L_p$ bytes) | Segment ($L_p$ bytes) | . . . | Segment ($L_p$ bytes) | Segment ($L_p$ bytes) |
|---|---|---|---|---|---|---|

the LLC frame is segmented and mapped onto RLC/MAC blocks to be transmitted

| hea-der | RLC data | | hea-der | RLC data | | hea-der | RLC data |
|---|---|---|---|---|---|---|---|

CRC protects header and payload

| hea-der | RLC data | CRC | tail bits | | hea-der | RLC data | CRC | tail bits | | hea-der | RLC data | CRC | tail bits |
|---|---|---|---|---|---|---|---|---|---|---|---|---|---|

⇩ ⇩ ⇩

| Encoded block | Encoded block | Encoded block |
|---|---|---|

⇩

Physical channel

SNDCP layer

LLC layer

RLC/MAC layer

Physical layer

EP 1 624 605 A1

# FIG 2

Wireless system protocol stack abstraction

# FIG 3

Receiver policy: Lost radio blocks yield IP-packet losses.
(Gray fields indicate losses.)

# FIG 4

Residual IP-packet loss rate_over code rate R
for MDS code with k=500 and witout FEC

EP 1 624 605 A1

FIG 5      Generation of a parity packet from two information
packets by bitewise XOR connection

information packet      information packet      information packet

| 1 0 0 1 1 1 |    | 0 0 1 1 1 0 |    | 1 0 1 0 0 1 |

FIG 6      Traditional receiver policy: only packets which are received in
total are forwarded to the upper layer. FEC decoding is performed
on completely received packets: FEC decoding fails.

from Wireless Channel

FIG 7      Permeable-layer receiver: all received segments are forwarded
to the upper layer. FEC decoding is performed on segment basis:
FEC decoding is successful.

from Wireless Channel

# FIG 8

IP-packet loss rate κ vs. code rate R for permeable-layer receiver (PLD) and traditional receiver (TR) for k=500.

Legend:
- TR ρ=5
- TR ρ=10
- TR ρ=25
- TR ρ=75
- PLR ρ=5
- PLR ρ=10
- PLR ρ=25
- PLR ρ=75

Y-axis: residual IP-packet loss rate κ

X-axis: code rate R

EP 1 624 605 A1

FIG 9    Simulation with LDGM staircase code: IP-packet loss rate $\kappa$ over code rate R
for permeable-layer receiver (PLR) and traditional receiver (TR) for k=500.

EP 1 624 605 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/002499 A1 (DANZIG JOEL ET AL) 2 January 2003 (2003-01-02) * paragraph [0088] - paragraph [0090] * * paragraph [0096] - paragraph [0100] * * paragraph [0060] * * paragraph [0109] * ----- | 1-9 | H04L1/00 |
| A | US 6 421 803 B1 (PERSSON JOAKIM ET AL) 16 July 2002 (2002-07-16) * column 3, line 4 - line 24 * ----- | 1-9 | |
| A | BAKIN D S ET AL: "Quantifying tcp performance lmprovement in noisy environments using protocol boosters" COMPUTERS AND COMMUNICATIONS, 2000. PROCEEDINGS. ISCC 2000. FIFTH IEEE SYMPOSIUM ON, 3 July 2000 (2000-07-03), pages 92-97, XP010505331 FRANCE * page 94, left-hand column, line 1 - right-hand column, line 4 * ----- | 1-9 | |

TECHNICAL FIELDS SEARCHED (Int.Cl.7)

H04L

The present search report has been drawn up for all claims

| Place of search | Date of completion of the search | Examiner |
|---|---|---|
| Munich | 24 January 2005 | Agudo Cortada, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 01 8726

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2005

| Patent document cited in search report | | | Publication date | Patent family member(s) | | Publication date |
|---|---|---|---|---|---|---|
| US 2003002499 | A1 | | 02-01-2003 | EP 1410527 A2 | | 21-04-2004 |
| | | | | WO 03001338 A2 | | 03-01-2003 |
| | | | | US 2003031198 A1 | | 13-02-2003 |
| US 6421803 | B1 | | 16-07-2002 | AU 5679200 A | | 31-01-2001 |
| | | | | CA 2377807 A1 | | 04-01-2001 |
| | | | | CN 1139219 C | | 18-02-2004 |
| | | | | WO 0101624 A1 | | 04-01-2001 |
| | | | | EP 1190520 A1 | | 27-03-2002 |
| | | | | JP 2003503894 T | | 28-01-2003 |
| | | | | TR 200200618 T2 | | 21-06-2002 |
| | | | | RU 2216868 C2 | | 20-11-2003 |
| | | | | ZA 200110464 A | | 20-12-2002 |

EPO FORM P0459

For more details about this annex : see Official Journal of the European Patent Office, No. 12/82